# DEMANDE DE BREVET EUROPEEN

(11) **EP 3 013 083 A1**
(43) Date de publication de la demande: **27.04.2016**
(21) Numéro de dépôt: 14306690.0
(22) Date de dépôt: 23.10.2014
(51) Int. Cl.: H04W 8/18, H04W 4/00, H04W 8/26

(54) **Procédé de téléchargement d'un profil d'abonné dans un élément de sécurité, élément de sécurité et serveurs correspondants**

(71) Demandeur: GEMALTO SA, 92190 Meudon (FR)
(72) Inventeur: Praca, Denis, 13881 GEMENOS Cedex (FR)

(57) **Abrégé**

L'invention concerne notamment un procédé de téléchargement d'un profil d'abonné dans un élément de sécurité (SE) coopérant avec un terminal de télécommunications, l'élément de sécurité (SE) comprenant un système d'exploitation.

Selon l'invention, le procédé consiste à :
- Télécharger dans l'élément de sécurité (SE), à partir d'un premier serveur (S1), des premières données (D1) supportées par le système d'exploitation ainsi qu'au moins une référence (RefD2a, RefD2b) à des secondes données (D2a, D2b) à télécharger par l'élément de sécurité (SE) d'au moins un deuxième serveur (S2) ;
- Transmettre de l'élément de sécurité (SE) à l'au moins deuxième serveur (S2), l'au moins une référence (RefD2a, RefD2b) ;
- Transmettre, de l'au moins deuxième serveur (S2) à l'élément de sécurité (SE), les secondes données (D2a, D2b), ces secondes données (D2a, D2b) étant supportées par le système d'exploitation et lui permettant d'apporter la fonctionnalité manquante identifiée par l'au moins une référence (RefD2a, RefD2b).

## Description

Le domaine de l'invention est celui des télécommunications et concerne plus précisément la personnalisation d'éléments de sécurité, tels que des cartes SIM, des UICC, des modules M2M (Machine to Machine en anglais) coopérant avec des terminaux de télécommunications. Les terminaux peuvent être des téléphones mobiles, des smartphones, des tablettes ou des machines par exemple.

Une telle personnalisation est habituellement réalisée en usine, dans un centre de personnalisation appartenant au fabricant de l'élément de sécurité. La personnalisation consiste à charger dans l'élément de sécurité un profil d'abonné complet comprenant notamment un IMSI (International Mobile Subscriber Identity), une clé de chiffrement Ki, un système de fichiers, des applets, des fichiers, ainsi que des applications USIM (Universal Subscriber Identity Module), ISIM (IP Multimedia Services Identity Module), CSIM (CDMA Subscriber Identity Module), EAP/AK (Extensible Authentication Protocol (EAP) / Authentication and key agreement (AK)).

Les opérateurs de radiotéléphonie mobile souhaitent de plus en plus pouvoir définir des profils d'abonnés et les télécharger dans des éléments de sécurité qui ont déjà été vendus à leurs utilisateurs finaux. Ces téléchargements peuvent par exemple être effectués par OTA (Over The Air en anglais) ou par Wifi si un futur abonné est sous couverture Wifi. Un élément de sécurité peut déjà comprendre un profil d'abonné ou en être complètement dépourvu, hormis comprendre une application dite « bootstrap » lui permettant de se connecter au réseau d'un opérateur afin de pouvoir télécharger un profil d'abonné complet. Ceci permet notamment de ne pas provisionner dans le HLR (Home Location Register) des IMSI (International Mobile Subscriber Identity) d'éléments de sécurité qui n'ont pas encore été vendus à leurs utilisateurs finaux et qui ne sont donc pas encore sur le terrain. Ceci est notamment le cas dans le domaine du M2M lorsque des éléments de sécurité sont intégrés dans des véhicules par exemple, et qui n'ont pas encore été vendus à leurs propriétaires.

Un problème se pose néanmoins quand l'opérateur ne connaît pas l'élément de sécurité dans lequel un abonnement complet doit être téléchargé : chaque élément de sécurité a son propre système d'exploitation et ce système d'exploitation doit non seulement supporter des données (exécutables ou non), appelées par la suite premières données, supportées par tous les systèmes d'exploitation existants, mais également des données (exécutables ou non), appelées par la suite secondes données, propres à un système d'exploitation donné (ce système d'exploitation étant propre à un fabricant d'éléments de sécurité). Ces secondes données sont notamment des NAA (Network Access Application) et comprennent notamment les applications précitées (USIM, ISIM, CSIM, EAP/AK,...).

Une solution à ce problème serait d'indiquer à l'opérateur sur quel élément de sécurité il doit télécharger un abonnement complet (profil d'abonné), par exemple en lui transmettant, à partir de l'élément de sécurité, un identifiant de l'élément de sécurité, typiquement son ICCID (acronyme de Integrated Circuit Card IDentifier) ou son eICCID (pour un élément de sécurité non extractible du terminal avec lequel il coopère ou alors difficilement, typiquement une eUICC telle que décrite dans "Remote Provisioning Architecture for Embedded UICC", version 1.0 datée du 17 décembre 2013 de la GSMA). Ceci nécessite cependant une infrastructure au niveau du réseau de l'opérateur associant chaque identifiant d'un élément de sécurité à un profil de NAA particulier (un ensemble d'applications propres à un système d'exploitation d'un fabricant d'éléments de sécurité). Ceci alourdit la charge de l'opérateur, d'autant qu'un fabricant peut avoir plusieurs systèmes d'exploitation, en fonction du type d'élément de sécurité.

De plus, si un NAA (ou plus généralement une seconde donnée) est modifié au cours de la vie de l'élément de sécurité par son fabricant, ce dernier doit le transmettre à tous les opérateurs susceptibles de télécharger des abonnements sur ses éléments de sécurité. Ceci implique une logistique lourde à gérer.

La présente invention a notamment pour objectif de remédier à ces inconvénients.

Plus précisément, un des objectifs de l'invention est de permettre à un opérateur de télécharger un abonnement dans un élément de sécurité sans connaître le système d'exploitation de cet élément de sécurité, et donc sans avoir aucune information sur le fabricant de cet élément de sécurité.

Cet objectif, ainsi que d'autres qui apparaîtront par la suite, est atteint grâce à un procédé de téléchargement d'un profil d'abonné dans un élément de sécurité coopérant avec un terminal de télécommunications, l'élément de sécurité comprenant un système d'exploitation, ce procédé consistant à :
- Télécharger dans l'élément de sécurité, à partir d'un premier serveur, des premières données supportées par le système d'exploitation ainsi qu'au moins une référence à des secondes données à télécharger par l'élément de sécurité d'au moins un deuxième serveur ;
- Transmettre de l'élément de sécurité à l'au moins deuxième serveur, l'au moins une référence ;
- Transmettre, de l'au moins deuxième serveur à l'élément de sécurité, les secondes données, les secondes données étant supportées par le système d'exploitation et lui permettant d'apporter la fonctionnalité manquante identifiée par l'au moins une référence.

Préférentiellement, l'au moins deuxième serveur est un serveur du fabricant de l'élément de sécurité.

Avantageusement, le téléchargement à partir de l'au moins deuxième serveur est effectué par un canal sécurisé à l'aide d'une clé de chiffrement comprise dans l'élément de sécurité.

L'élément de sécurité est préférentiellement une eUICC.

L'invention concerne également un élément de sécurité apte à télécharger un profil d'abonné, l'élément de sécurité étant destiné à coopérer avec un terminal de télécommunications et comprenant un système d'exploitation, cet élément de sécurité comportant :
- Des moyens pour stocker des premières données supportées par le système d'exploitation, les premières données provenant d'un premier serveur ;
- Des moyens pour stocker au moins une référence de secondes données, l'au moins une référence provenant du premier serveur ;
- Des moyens pour transmettre à au moins un deuxième serveur l'au moins une référence ;
- Des moyens pour recevoir de l'au moins deuxième serveur et les stocker les secondes données, les secondes données étant supportées par le système d'exploitation et lui permettant d'apporter la ou les fonctionnalités manquantes identifiées par l'au moins une référence et permettant à l'élément de sécurité d'étendre ses fonctionnalités.

L'invention concerne également le premier serveur, ce serveur comprenant :
- des moyens pour télécharger une partie d'un profil d'abonné dans un élément de sécurité coopérant avec un terminal de télécommunications, la partie du profil d'abonné comprenant des premières données supportées par le système d'exploitation de l'élément de sécurité ;
- des moyens pour transmettre à l'élément de sécurité au moins une référence à des secondes données, les secondes données devant être téléchargées par l'élément de sécurité d'au moins un second serveur et étant supportées par le système d'exploitation de l'élément de sécurité.

L'invention concerne également le deuxième serveur, ce serveur comprenant :
- des moyens pour recevoir d'un élément de sécurité au moins une référence à des données, appelées secondes données, supportées par le système d'exploitation de l'élément de sécurité ;
- des moyens pour transmettre à l'élément de sécurité les secondes données, ces secondes données permettant d'étendre les fonctionnalités de l'élément de sécurité.

Le deuxième serveur est préférentiellement un serveur d'un fabricant de l'élément de sécurité.

La transmission des secondes données est préférentiellement effectuée par un canal sécurisé à l'aide d'une clé de chiffrement comprise dans l'élément de sécurité.

D'autres caractéristiques et avantages de l'invention apparaîtront à la lecture de la description suivante d'un mode de mise en oeuvre de l'invention, donné à titre illustratif et non limitatif, et de la figure unique annexée montrant les différentes étapes du procédé selon l'invention permettant de télécharger un profil d'abonné complet dans un élément de sécurité.

Sur cette figure, trois entités sont représentées: un premier serveur S1, un deuxième serveur S2 et un élément de sécurité SE, un UICC ou une eUICC par exemple. L'élément de sécurité SE coopère avec un terminal de télécommunications non représenté et possède un système d'exploitation.

Le premier serveur S1 est typiquement un serveur d'un opérateur de téléphonie mobile, par exemple un serveur OTA. A l'occurrence d'un évènement, par exemple à la demande d'une entité externe, à la demande de l'utilisateur de l'élément de sécurité SE ou sur détection que l'élément de sécurité SE a été inséré dans un terminal, le serveur S1 transmet à cet élément de sécurité des premières données D1 supportées par le système d'exploitation de l'élément de sécurité. Cette transmission s'effectue par exemple à l'aide d'une application dite « bootstrap » installée dans l'élément de sécurité SE lors de sa fabrication. Elle peut également s'effectuer à l'aide d'un abonnement complet déjà installé (par la méthode selon l'invention ou alors lors d'une personnalisation de l'élément de sécurité SE faite lors de sa fabrication en usine).

Ces données D1 sont typiquement un couple IMSI/KI, des clés, un système de fichiers, des applets et des fichiers supportés par tous les éléments de sécurité administrables par le serveur S1, quel que soit leur système d'exploitation. Les données D1 sont exploitables par tout élément de sécurité, quel que soit son système d'exploitation.

Le système d'exploitation est dépendant du fabricant de l'élément de sécurité SE mais l'opérateur du serveur S1 n'en n'a pas connaissance.

Les données D1 sont donc indépendantes du système d'exploitation de l'élément de sécurité SE, c'est-à-dire qu'elles apportent des fonctionnalités qui fonctionneront avec n'importe quel système d'exploitation d'éléments de sécurité administrables par le serveur S1.

Les données D1 ne sont cependant pas suffisantes pour faire fonctionner correctement l'élément de sécurité SE. Il lui manque des applications et des données qui, elles, dépendent du système d'exploitation de l'élément de sécurité SE. Le profil transmis n'est donc pas complet. Il manque notamment les NAA précités qui ne sont pas interopérables.

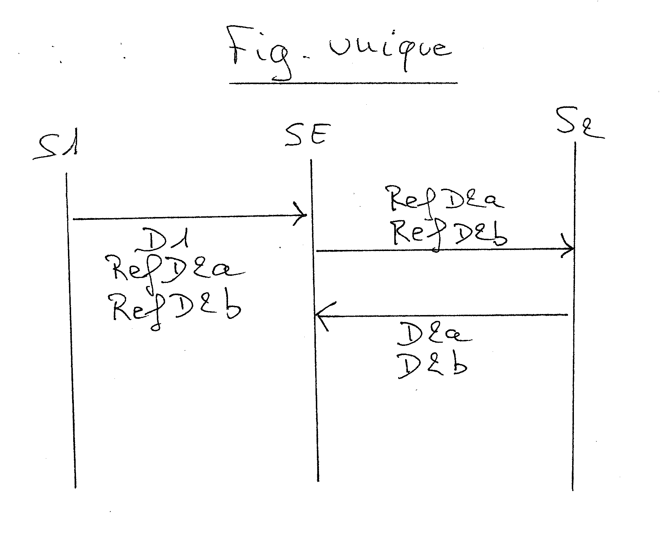

Afin de compléter ce profil, le serveur S1 transmet également à l'élément de sécurité SE au moins une référence à des secondes données (exécutables ou non, par exemple des programmes, des données ou des algorithmes) supportées par le système d'exploitation de l'élément de sécurité mais ne pouvant être téléchargées (ou alors si elles étaient téléchargées, elles ne seraient pas fonctionnelles) du premier serveur puisque ce premier serveur S1 ne connait pas le système d'exploitation de l'élément de sécurité SE. Ces références sont notées RefD2a et RefD2b dans la figure 1.

RefD2a correspond par exemple à la référence d'une application ISIM D2a et RefD2b correspond par exemple à la référence d'une application USIM D2b. Il peut également s'agir de données à télécharger.

A la réception de ces références, l'élément de sécurité SE sait qu'il doit télécharger les applications ou données D2a et D2b. Il transmet alors ces références au deuxième serveur S2 dont il connaît l'adresse. Si les applications à télécharger sont présentes sur des serveurs différents, plusieurs serveurs sont contactés (mode pull).

Le serveur S2 est par exemple un serveur OTA. Il appartient typiquement au fabricant de l'élément de sécurité, l'essentiel étant que les données permettant de compléter le profil soient identifiables par le serveur S2. Ceci est par exemple possible en transmettant de l'élément de sécurité SE un identifiant de modèle, de type, son ICCID, ou une référence de son système d'exploitation.

Le second serveur S2 transmet alors à l'élément de sécurité SE les données ou applications D2a et D2b, de préférence sur un canal sécurisé à l'aide d'une clé de chiffrement comprise dans l'élément de sécurité SE. Les secondes données D2a et D2b sont supportées par le système d'exploitation de l'élément de sécurité SE et lui permettent d'apporter les fonctionnalités manquantes identifiées par les références RefD2a et RefD2b.

L'élément de sécurité SE est de préférence une eUICC.

L'élément de sécurité SE, une fois en possession des données D1, D2a et D2b est apte à fonctionner normalement car ces données correspondent à un abonnement (profil) complet.

L'invention permet donc d'obtenir une interopérabilité des éléments de sécurité, car le serveur S1 est capable de télécharger dans l'élément de sécurité SE des données sans connaître son système d'exploitation (tous les systèmes d'exploitation auquel le serveur S1 peut se connecter supportent les premières données), l'élément de sécurité SE se chargeant de récupérer les données manquantes, correspondant à son système d'exploitation, auprès du serveur S2.

L'invention concerne également un élément de sécurité SE apte à télécharger un profil d'abonné, l'élément de sécurité SE étant destiné à coopérer avec un terminal de télécommunications, l'élément de sécurité SE comprenant un système d'exploitation et comportant :
- Des moyens pour stocker les premières données D1 supportées par son système d'exploitation, les premières données D1 provenant du premier serveur S1 ;
- Des moyens pour stocker au moins une référence RefD2a, RefD2b de secondes données D2a, D2b, les références RefD2a et RefD2b provenant du premier serveur S1 ;
- Des moyens pour transmettre à au moins un deuxième serveur S2 les références RefD2a et RefD2b ;
- Des moyens pour recevoir du deuxième serveur S2 et les stocker les secondes données D2a et D2b, les secondes données D2a et D2b étant supportées par son système d'exploitation et lui permettant d'apporter les fonctionnalités manquantes identifiées par les références RefD2a et RefD2b et permettant à l'élément de sécurité d'étendre ses fonctionnalités.

L'invention concerne également le premier serveur S1, ce serveur S1 comportant :
- des moyens pour télécharger une partie d'un profil d'abonné dans l'élément de sécurité SE, la partie dudit profil d'abonné comprenant les premières données D1 supportées par le système d'exploitation de l'élément de sécurité SE ;
- des moyens pour transmettre à l'élément de sécurité SE les références RefD2a et RefD2b aux secondes données D2a et D2b devant être téléchargées par l'élément de sécurité SE d'au moins du second serveur S2, ces secondes données D2a et D2b étant supportées par le système d'exploitation de l'élément de sécurité SE.

L'invention concerne également le deuxième serveur S2, ce serveur S2 comportant :
- des moyens pour recevoir de l'élément de sécurité SE au moins une référence RefD2a, RefD2b à des secondes données D2a, D2b supportées par le système d'exploitation de l'élément de sécurité SE ;
- des moyens pour transmettre à l'élément de sécurité SE les secondes données D2a et D2b, ces secondes données permettant d'étendre les fonctionnalités de l'élément de sécurité.

L'invention permet donc d'obtenir une interopérabilité car tout opérateur gérant le serveur S1 peut être à l'origine d'un téléchargement d'un abonnement complet sur un élément de sécurité, sans connaître son système d'exploitation.

## Revendications

1. Procédé de téléchargement d'un profil d'abonné dans un élément de sécurité (SE) coopérant avec un terminal de télécommunications, ledit élément de sécurité (SE) comprenant un système d'exploitation, **caractérisé en ce qu'**il consiste à :
- Télécharger dans ledit élément de sécurité (SE), à partir d'un premier serveur (S1), des premières données (D1) supportées par ledit système d'exploitation ainsi qu'au moins une référence (RefD2a, RefD2b) à des secondes données (D2a, D2b) à télécharger par ledit élément de sécurité (SE) d'au moins un deuxième serveur (S2) ;
- Transmettre dudit élément de sécurité (SE) audit au moins deuxième serveur (S2), ladite au moins une référence (RefD2a, RefD2b) ;
- Transmettre, dudit au moins deuxième serveur (S2) audit élément de sécurité (SE), lesdites secondes données (D2a, D2b), lesdites secondes données (D2a, D2b) étant supportées par ledit système d'exploitation et lui permettant d'apporter la fonctionnalité manquante identifiée par ladite au moins une référence (RefD2a, RefD2b).

2. Procédé selon la revendication 1, **caractérisé en ce que** ledit au moins deuxième serveur (S2) est un serveur du fabricant dudit élément de sécurité (SE).

3. Procédé selon l'une des revendications 1 et 2, **caractérisé en ce que** ledit téléchargement à partir dudit au moins deuxième serveur (S2) est effectué par un canal sécurisé à l'aide d'une clé de chiffrement comprise dans ledit élément de sécurité (SE).

4. Procédé selon l'une des revendications 1 à 3, **caractérisé en ce que** ledit élément de sécurité (SE) est une eUICC.

5. Elément de sécurité (SE) apte à télécharger un profil d'abonné, ledit élément de sécurité (SE) étant destiné à coopérer avec un terminal de télécommunications, ledit élément de sécurité (SE) comprenant un système d'exploitation, **caractérisé en ce qu'**il comporte :
- Des moyens pour stocker des premières données (D1) supportées par ledit système d'exploitation, lesdites premières données (D1) provenant d'un premier serveur (S1) ;
- Des moyens pour stocker au moins une référence (RefD2a, RefD2b) de secondes données (D2a, D2b), ladite au moins une référence (RefD2a, RefD2b) provenant dudit premier serveur (S1) ;
- Des moyens pour transmettre à au moins un deuxième serveur (S2) ladite au moins une référence (RefD2a, RefD2b) ;
- Des moyens pour recevoir dudit au moins deuxième serveur (S2) et les stocker lesdites secondes données (D2a, D2b), lesdites secondes données (D2a, D2b) étant supportées par ledit système d'exploitation et lui permettant d'apporter la fonctionnalité manquante identifiée par ladite au moins une référence (RefD2a, RefD2b) et permettant audit élément de sécurité (SE) d'étendre ses fonctionnalités.

6. Elément de sécurité (SE) selon la revendication 5, **caractérisé en ce qu'**il est constitué par une eUICC.

7. Serveur, appelé premier serveur (S1), **caractérisé en ce qu'**il comporte :
- des moyens pour télécharger une partie d'un profil d'abonné dans un élément de sécurité (SE) coopérant avec un terminal de télécommunications, ladite partie dudit profil d'abonné comprenant des premières données (D1) supportées par le système d'exploitation dudit élément de sécurité (SE) ;
- des moyens pour transmettre audit élément de sécurité (SE) au moins une référence (RefD2a, RefD2b) à des secondes données (D2a, D2b), lesdites secondes données (D2a, D2b) devant être téléchargées par ledit élément de sécurité (SE) d'au moins un second serveur (S2) et étant supportées par le système d'exploitation dudit élément de sécurité (SE).

8. Serveur, appelé deuxième serveur (S2), **caractérisé en ce qu'**il comporte :
- des moyens pour recevoir d'un élément de sécurité (SE) au moins une référence (RefD2a, RefD2b) à des données, appelées secondes données (D2a, D2b), supportées par le système d'exploitation dudit élément de sécurité (SE) ;
- des moyens pour transmettre audit élément de sécurité (SE) lesdites secondes données (D2a, D2b), lesdites secondes données (D2a, D2b) permettant d'étendre les fonctionnalités dudit élément de sécurité (SE).

9. Serveur selon la revendication 8, **caractérisé en ce qu'**il est un serveur (S2) d'un fabricant dudit élément de sécurité (SE).

10. Serveur selon l'une des revendications 8 et 9, **caractérisé en ce que** ladite transmission desdites secondes données (D2a, D2b) est effectuée par un canal sécurisé à l'aide d'une clé de chiffrement comprise dans ledit élément de sécurité (SE).
